# EUROPEAN PATENT SPECIFICATION

(11) **EP 2 264 092 B1**
(45) Date of publication and mention of the grant of the patent: **24.10.2012**
(21) Application number: 10165657.7
(22) Date of filing: 11.06.2010
(51) Int. Cl.: C08K 3/34, C08K 7/00, C08L 95/00

(54) **Waterproofing membranes based on bitumen modified with polymers containing aluminium silicate cenospheres.**
Wasserfeste Membranen basierend auf mit Polymeren modifiziertem Bitumen mit Aluminium-Silicatzenosphären
Membranes d'imperméabilisation basées sur du bitume modifié avec des polymères, contenant des cénosphères en silicate d'aluminium

(30) Priority: 16.06.2009 IT MI20091062
(43) Date of publication of application: 22.12.2010
(73) Proprietor: Polyglass S.p.A., 20159 Milano (IT)
(72) Inventor: Drigo, Michele, 31047, PONTE DI PIAVE (TV) (IT); Pascon, Daniele, 31040, SALGAREDA (TV) (IT); Zaffaroni, Pasquale, 20159, Milano (IT)
(74) Representative: Minoja, Fabrizio

(56) References cited:
- DE-A1- 1 910 178
- DE-A1- 2 045 624
- DE-A1- 4 340 339
- US-A- 4 420 524
- US-A1- 2009 061 236

## Description

This invention relates to waterproofing membranes based on bitumen.

### PRIOR ART

Formulations comprising industrial bitumen, a mineral filler, a thermoplastic polymer or a mixture of thermoplastic polymers have long been proposed for the preparation of waterproofing membranes designed for applications in the construction industry. The mineral filler typical of conventional formulations is calcium carbonate.

For example, US 2006/0110996 discloses waterproofing membranes obtained by applying a formulation comprising bitumen, a thermoplastic polymer, calcium carbonate and titanium dioxide to one side of a fibrous material such as fibreglass or a non-woven polyester.

US 4,420,524 describes similar waterproofing membranes obtained by impregnating a plurality of reinforcing layers consisting of fibreglass and polyester structures with a formulation of bitumen and a thermoplastic polymer, and possibly a mineral filler consisting of various compounds such as slaked lime, talc, clays, diatomaceous earths, cement.

In this specific application sector, the need is particularly felt for bituminous formulations which allow the preparation of waterproofing membranes that are as light as possible without prejudicing the strength and performance of the membrane.

US 2009/061236 discloses a bituminous formulation consisting of an ethylene/alpha-olefin interpolymer which dissolves rapidly in bitumen and presents improved stability to heat and UV rays. The problem of reducing the weight of waterproofing membranes is not dealt with therein.

DE 4340339 discloses the addition of very high percentages, from 15 to 50% in volume, of hollow glass or silica microspheres to bitumen compositions for applications other than the preparation of waterproofing membranes.

DE 2045624 and DE 1910178 describe coating compositions comprising olefin polymers, bitumen and aluminosilicates (kaolin, bentonite).

None of the documents cited deals with the technical problem of reducing the weight and improving the performance of waterproofing membranes for the construction industry.

### DESCRIPTION OF THE INVENTION

It has now been found that a particularly advantageous bituminous formulation can be obtained by replacing the calcium carbonate or equivalent mineral fillers having known formulations with a material consisting of aluminium silicate in the form of cenospheres with a density of much less than 1 g/cm³.

The formulation according to the invention is characterised by a specific gravity much lower than that of the conventional formulation; this allows the manufacture of membranes which, thickness being equal, are lighter than those manufactured with the conventional formulation, with no reduction in the strength or performance of the membrane.

Weight reduction constitutes a major advantage in the application of waterproofing membranes on building sites, as this application is still performed manually.

The transport of membrane rolls at a height is facilitated, and less effort is required for the layer to lay the membrane on the surface to be waterproofed.

The greater flexibility of the new membrane also means that it adapts better to the surface to be waterproofed, which is rarely perfectly flat.

### DETAILED DESCRIPTION OF THE INVENTION

The first aspect of the invention relates to waterproofing membranes consisting of a reinforcing material impregnated with a bituminous formulation comprising industrial bitumen, a mineral filler, a thermoplastic polymer or a mixture of thermoplastic polymers, **characterised in that** the mineral filler consists of aluminium silicate in the form of cenospheres with a density of between 0.6 and 0.85 g/cm³ and a size of between 5 and 300, preferably between 5 and 106 µm.

The bituminous waterproofing membranes according to the invention are characterised by a specific gravity of under 1 g/cm³.

A further aspect of the invention relates to a process for the preparation of waterproofing membranes which comprises impregnation of a reinforcing material with a formulation such as the one described above. Finally, the invention also relates to the membranes obtainable by said process, belonging to different classes defined by cold bending values measured according to standard EN 1109, in the 0-25°C range.

The thermoplastic polymer is preferably selected from low-density polyethylene, high-density polyethylene, isotactic polypropylene, ethylene/propylene copolymer, ethylene/propylene/butene terpolymer, atactic polypropylene, and styrene-butadiene-styrene block copolymer.

Industrial bitumen, in particular bitumen 180/200, is generally present in the formulations according to the invention in quantities of between 75% and 85% by weight, while the thermoplastic polymer or polymers are present in quantities of between 10% and 18%.

Aluminium silicate in the form of cenospheres with a density of between 0.6 and 0.85 g/cm³ and a size of between 5 and 300, preferably between 5 and 106 µm, is a product available on the market under the name Fillite®.

Said material is present in the formulation in quantities of between 2% and 10% by weight, preferably in quantities of between 3% and 6% by weight.

Reinforcing materials which can be impregnated with the formulations according to the invention to prepare the waterproofing membranes include non-woven polyester and surfacing mat.

Bituminous membranes are traditionally classified on the basis of the cold bending parameter, measured according to standard EN 1109, which determines the minimum temperature at which a test specimen of bituminous membrane can be bent around a specific mandrel without cracking.

The three most common classes on the market are Class -5°C, Class -10°C and Class -15°C. This classification is not included in a specific standard, but has historically been recognised by the market.

Typical conventional formulations for each class are listed below:
Class -5°C.

Composition of the formulation, expressed as a % by weight:
■ Mixture of high- and low-density polyethylene: 6%;
■ Calcium carbonate: 49%;
■ Industrial bitumen 180/200: 45%.

Weight of 4 mm thick membrane: 5.7 kg/m².

Weight of 10 m² roll of membrane: 57 kg.

Mechanical characteristics of compound:
■ Cold bending (EN1109): -5°C;
■ Penetration at 25°C (EN 1426): 18 dmm;
■ Penetration at 60°C (EN 1426): 80 dmm;
■ Softening point (EN1427): 120°C;
■ Viscosity at 180°C with Brookfield DV-E viscometer, RV07 spindle, 100 rpm: 13000 cps.

Typical performance characteristics of membrane:
■ High-temperature flow resistance (EN 1110): 110°C.
■ Watertightness (EN 1928-B): 100 kPa.

Class -10°C.

Composition of the formulation, expressed as a % by weight:
■ Mixture of high- and low-density polyethylene: 8%;
■ Calcium carbonate: 38%;
■ Industrial bitumen 180/200: 54%;
Weight of 4 mm thick membrane: 5.2 kg/m²;

Weight of 10 m² roll of membrane: 52 kg.

Mechanical characteristics of compound:
■ Cold bending (EN1109): -10°C;
■ Penetration at 25°C (EN 1426): 18 dmm;
■ Penetration at 60°C (EN 1426): 85 dmm;
■ Softening point (EN1427): 120°C;
■ Viscosity at 180°C with Brookfield DV-E viscometer, RV07 spindle, 100 rpm: 9300 cps.

Typical performance characteristics of membrane:
■ High-temperature flow resistance (EN 1110): 110°C;
■ Watertightness (EN 1928-B): 100 kPa.

### Class -15°C.

Composition of the formulation, expressed as a % by weight:
■ Mixture of low-density polyethylene and styrene-butadiene-styrene block copolymer: 6%;
■ Calcium carbonate: 35%;
■ Industrial bitumen 180/200: 59%.
Weight of 4 mm thick membrane: 5.1 kg/m²;

Weight of 10 m² roll of membrane: 51 kg.

Mechanical characteristics of compound:
■ Cold bending (EN1109): -15°C;
■ Penetration at 25°C (EN 1426): 26 dmm;
■ Penetration at 60°C (EN 1426): 103 dmm;
■ Softening point (EN1427): 118°C;
■ Viscosity at 180°C with Brookfield DV-E viscometer, RV07 spindle, 100 rpm: 9200 cps.

Typical performance characteristics of membrane:
■ High-temperature flow resistance (EN 1110): 110°C.
■ Watertightness (EN 1928-B): 100 kPa.

The formulation according to the invention allows membranes which are much lighter than conventional membranes to be obtained without any reduction, and in some respects an improvement, in their performance.

In particular, the distinguishing characteristics of the new formulation, compared with the conventional formulation suitable for the manufacture of a membrane in the same class, can be summarised as follows:
Total absence of calcium carbonate;
Mineral filler consisting of aluminium silicate in the form of cenospheres with a density of between 0.6 and 0.85 g/cm³ and a size of between 5 and 300 µm;

Higher softening point.

Different rheological characteristics significantly reduce the time required to transfer the compound from the mixer to the impregnation tank, and improve its behaviour at the impregnation stage.

The distinguishing characteristics of the membranes obtained with the formulation according to the invention are as follows:
The weight of the membrane is considerably lower, thickness being equal.

Higher softening point. The new membrane is more resistant to high temperatures, facilitates the laying stage by preventing the whole compound from melting, and prevents "footprinting".

Faster production line.

The invention is illustrated in greater detail in the following examples.

### EXAMPLE 1: Class -5 membrane

The following substances are introduced into a 10 m³ mixer:
■ Low-density polyethylene: 800 kg;
■ Isotactic polypropylene: 600 kg;
■ Mineral filler consisting of aluminium silicate in the form of cenospheres with a density of between 0.6 and 0.85 g/cm³ and a size of between 5 and 300 mm; 500 kg;
■ Industrial bitumen 180/200: 7611 kg.

The composition of the formulation, expressed as a % by weight, is:
■ Mixture of low-density polyethylene and isotactic polypropylene: 15.5%;
■ Mineral filler: 5.5%;
■ Industrial bitumen 180/200: 79%.

Mechanical characteristics of compound:
■ Cold bending (EN1109): -5°C;
■ Penetration at 25°C (EN 1426): 16 dmm;
■ Penetration at 60°C (EN 1426): 70 dmm;
■ Softening point (EN1427): 160°C;
■ Viscosity at 180°C with Brookfield DV-E viscometer, RV07 spindle, 100 rpm: 11600 cps.

When the compound thus obtained is used on a wholly conventional membrane production line, a membrane with the following characteristics is produced:
■ Weight of 4 mm thick membrane: 3.8 kg/m²;
■ Weight of 10 m² roll of membrane: 38 kg.

Performance characteristics of membrane:
■ High-temperature flow resistance (EN 1110): 120°C;
■ Watertightness (EN 1928-B): 100 kPa.

### EXAMPLE 2: Class -10 membrane

The following substances are introduced into a 10 m³ mixer:
■ Low-density polyethylene: 500 kg;
■ Isotactic polypropylene: 400 kg;
■ Ethylene/propylene copolymer: 500 kg;
■ Mineral filler consisting of aluminium silicate in the form of cenospheres with a density of between 0.6 and 0.85 g/cm³ and a size of between 5 and 300 mm; 500 kg;
■ Industrial bitumen 180/200: 7612 kg.

The composition of the formulation, expressed as a % by weight, is:
■ Mixture of low-density polyethylene, isotactic polypropylene, and ethylene/propylene copolymer: 14.7%;
■ Mineral filler: 5.3%;
■ Industrial bitumen 180/200: 80%.

Mechanical characteristics of compound:
■ Cold bending (EN1109): -10°C;
■ Penetration at 25°C (EN 1426): 17 dmm;
■ Penetration at 60°C (EN 1426): 60 dmm;
■ Softening point (EN1427): 159°C;
■ Viscosity at 180°C with Brookfield DV-E viscometer, RV07 spindle, 100 rpm: 6520 cps.

When the compound thus obtained is used on a wholly conventional membrane production line, a membrane with the following characteristics is produced:
■ Weight of 4 mm thick membrane: 3.8 kg/m²;
■ Weight of 10 m² roll of membrane: 38 kg.

Performance characteristics of membrane:
■ High-temperature flow resistance (EN 1110): 130°C.
■ Watertightness (EN 1928-B): 100 kPa.

The rheological characteristics of the novel formulation are significantly different from those of the conventional formulation, as shown in the Table, which presents the viscosity values in cps at 180°C with a Brookfield DV-E viscometer, RV07 spindle, on variation in the viscometer speed.

**Table**

| | 10 rpm | 20 rpm | 50 rpm | 100 rpm |
|---|---|---|---|---|
| | | | | |
| Novel formulation | 14800 | 14000 | 9460 | 6520 |
| | | | | |
| Conventional formulation | 14600 | 11800 | 10360 | 9300 |
| | | | | |
| | | | | |

As demonstrated by the data in the Table, both formulations present a marked pseudoplastic behaviour, because their viscosity declines as the spindle speed increases, which causes the deformation rate of the fluid to increase.

However, whereas the prevalent decline in the viscosity value appears in the 10-20 rpm range in the case of the conventional formulation, in the case of the formulation according to the invention the prevalent decline in the viscosity value appears in the 20-100 rpm range, with a significantly lower viscosity at 100 rpm than that of the conventional formulation. This different behaviour indicates that although the viscosity values of the formulation according to the invention are equivalent to those of the conventional formulation at a low deformation rate, the viscosity is much lower at a higher deformation rate.

Said behaviour is advantageous in the manufacturing process, leading to a reduction in the time required to transfer the compound from the mixer to the production line and shorter times at the subsequent impregnation stage (faster production line), where the high speed of the production line imposes high deformation rates on the compound. High viscosity at low deformation rate, which is typical of the drying stage, prevents the compound from leaking downstream the impregnation stage.

### EXAMPLE 3: Class -15 membrane

The following substances are introduced into a 10 m³ mixer:
■ Low-density polyethylene: 400 kg.
■ Styrene-butadiene-styrene block copolymer: 700 kg.
■ Mineral filler consisting of aluminium silicate in the form of cenospheres with a density of between 0.6 and 0.85 g/cm³ and a size of between 5 and 300 mm; 500 kg;
■ Industrial bitumen 180/200: 7945 kg.

The composition of the formulation, expressed as a % by weight, is:
■ Mixture of low-density polyethylene and styrene-butadiene-styrene block copolymer: 11.5%;
■ Mineral filler: 5.2%;
■ Industrial bitumen 180/200: 83.3%.

Mechanical characteristics of compound:
■ Cold bending (EN1109): -15°C;
■ Penetration at 25°C (EN 1426): 30 dmm;
■ Penetration at 60°C (EN 1426): 135 dmm;
■ Softening point (EN1427): 120°C;
■ Viscosity at 180°C with Brookfield DV-E viscometer, RV07 spindle, 100 rpm: 7920 cps.

When the compound thus obtained is used on a wholly conventional membrane production line, a membrane with the following characteristics is produced:
■ Weight of 4 mm thick membrane: 3.8 kg/m²;
■ Weight of 10 m² roll of membrane: 38 kg.

Performance characteristics of membrane:
■ High-temperature flow resistance (EN 1110): 110°C;

Watertightness (EN 1928-B): 100 kPa.

## Claims

1. Waterproofing membranes consisting of a reinforcing material impregnated with a bituminous formulation comprising industrial bitumen, a mineral filler, a thermoplastic polymer or a mixture of thermoplastic polymers, **characterised in that** the mineral filler consists of aluminium silicate in the form of cenospheres with a density of between 0.6 and 0.85 g/cm³ and a size of between 5 and 300 µm, preferably between 5 and 106 µm.

2. Waterproofing membranes as claimed in claim 1, wherein the thermoplastic polymer is selected from low-density polyethylene, high-density polyethylene, isotactic polypropylene, ethylene/propylene copolymer, ethylene/propylene/butene terpolymer, atactic polypropylene, and styrenebutadiene-styrene block copolymer.

3. Waterproofing membranes as claimed in claim 1 or 2, wherein the industrial bitumen is present in quantities of between 75% and 85% by weight.

4. Waterproofing membranes as claimed in any of claims 1 to 3, wherein the thermoplastic polymer or polymers are present in quantities of between 10% and 18%.

5. Waterproofing membranes as claimed in any of claims 1 to 4, wherein the mineral filler is present in quantities of between 2% and 10% by weight, and preferably in quantities of between 3% and 6% by weight.

6. Waterproofing membranes as claimed in one or more of claims 1-5, **characterised by** a specific gravity of under 1 g/cm³.

7. Process for the preparation of waterproofing membranes belonging to different classes defined by cold bending values, measured according to standard EN 1109, in the 0-25°C range, which comprises impregnation of a reinforcing material with a formulation comprising industrial bitumen, a mineral filler consisting of aluminium silicate in the form of cenospheres with a density of between 0.6 and 0.85 g/cm³ and a size of between 5 and 300 µm, preferably between 5 and 106 µm, and a thermoplastic polymer or a mixture of thermoplastic polymers.

8. Process as claimed in claim 7, wherein the reinforcing material is a nonwoven polyester.

9. Waterproofing membranes obtainable by the process claimed in claim 8.

## Patentansprüche

1. Wasserabweisende Membranen, bestehend aus einem Verstärkungs material, welches mit einer bituminösen Formulierung imprägniert ist, die industrielles Bitumen, einen mineralische Füllstoff, ein thermoplastisches Polymer oder eine Mischung von thermoplastischen Polymeren umfasst, **dadurch gekennzeichnet, dass** der mineralische Füllstoff aus Aluminiumsilikat in der Form von Zenosphären mit einer Dichte von zwischen 0,6 und 0,85 g/cm³ und einer Größe von zwischen 5 und 300 µm, vorzugsweise zwischen 5 und 106 µm, besteht.

2. Wasserabweisende Membranen nach Anspruch 1, wobei das thermoplastische Polymer ausgewählt ist aus Polyethylen niedriger Dichte, Polyethylen hoher Dichte, isotaktischem Polypropylen, Ethylen/Propylen-Copolymer, Ethylen/Propylen/Buten-Terpolymer, ataktischem Polypropylen und Styrol-Butadien-Styrol-Blockcopolymer.

3. Wasserabweisende Membranen nach Anspruch 1 oder 2, wobei das industrielle Bitumen in Mengen von zwischen 75 Gew.% und 85 Gew.% vorliegt.

4. Wasserabweisende Membranen nach einem der Ansprüche 1 bis 3, wobei das thermoplastische Polymer oder die Polymere in Mengen von zwischen 10 % und 18 % vorliegen.

5. Wasserabweisende Membranen nach einem der Ansprüche 1 bis 4, wobei der mineralische Füllstoff in Mengen von zwischen 2 Gew.% und 10 Gew.% vorliegt und vorzugsweise in Mengen von zwischen 3 Gew.% und 6 Gew.%.

6. Wasserabweisende Membranen nach einem oder mehreren der Anspruche 1 bis 5, **gekennzeichnet durch** eine relative Dichte von unter 1 g/cm³.

7. Verfahren zur Herstellung von wasserabweisenden Membranen, die zu unterschiedlichten Klassen gehören, die durch Kaltbiegewerte, welche gemäß Standard EN 1109 erfasst werden, in dem Bereich von 0-25 °C definiert sind, welches umfasst: Imprägnieren eines Verstärkungsmaterials mit einer Formulierung, die industrielles Bitumen, einen aus Aluminiumsilikat in der Form von Zenosphären mit einer Dichte von zwischen 0,6 und 0,85 g/cm³ und einer Größe von zwischen 5 und 300 µm, vorzugsweise zwischen 5 und 106 µm, bestehenden mineralischen Füllstoff und ein thermoplastisches Polymer oder eine Mischung von thermoplastischen Polymeren umfasst.

8. Verfahren nach Anspruch 7, wobei das Verstärkungsmaterial ein nicht-gewebter Polyester ist.

9. Wasserabweisende Membranen, erhältlich durch das Verfahren nach Anspruch 8.

## Revendications

1. Membranes d'étanchéité consistant en un matériau de renfort imprégné avec une formulation bitumineuse comprenant du bitume industriel, une charge minérale, un polymère thermoplastique ou un mélange de polymères thermoplastiques, **caractérisées en ce que** la charge minérale consiste en du silicate d'aluminium sous la forme de cénosphères avec une densité d'entre 0,6 et 0,85 g/cm³ et une taille d'entre 5 et 300 µm, préférablement entre 5 et 106 µm.

2. Membranes d'étanchéité selon la revendication 1, dans lesquelles le polymère thermoplastique est choisi parmi un polyéthylène basse densité, un polyéthylène haute densité, un polypropylène isotactique, un copolymère d'éthylène/propylène, un terpolymère d'éthylène/propylène/butène, un polypropylène atactique, et un copolymère blocs de styrène-butadiène-styrène.

3. Membranes d'étanchéité selon la revendication 1 ou 2, dans lesquelles le bitume industriel est présent dans des quantités d'entre 75% et 85% en poids.

4. Membranes d'étanchéité selon l'une quelconque des revendications 1 à 3, dans lesquelles le polymère ou les polymères thermoplastique(s) est/sont présent(s) dans des quantités d'entre 10% et 18%.

5. Membranes d'étanchéité selon l'une quelconque des revendications 1 à 4, dans lesquelles la charge minérale est présente dans des quantités d'entre 2% et 10% en poids, et préférablement dans des quantités d'entre 3% et 6% en poids.

6. Membranes d'étanchéité selon l'une quelconque des revendications 1 à 5, **caractérisées par** une densité de moins de 1 g/cm³.

7. Procédé de préparation de membranes d'étanchéité appartenant à différentes classes définies par des valeurs de cintrage à froid, mesurées conformément à la norme EN 1109, dans la plage de 0 à 25°C, qui comprend une imprégnation d'un matériau de renfort avec une formulation bitumineuse comprenant du bitume industriel, une charge minérale consistant en du silicate d'aluminium sous la forme de cénosphères avec une densité d'entre 0,6 et 0,85 g/cm³ et une taille d'entre 5 et 300 µm, préférablement entre 5 et 106 µm, et un polymère thermoplastique ou un mélange de polymères thermoplastiques.

8. Procédé selon la revendication 7, dans lequel le matériau de renfort est un polyester non tissé.

9. Membranes d'étanchéité pouvant être obtenues par le procédé selon la revendication 8.
